# EUROPEAN PATENT APPLICATION

(11) **EP 0 677 976 A2**
(43) Date of publication of application: **18.10.1995**
(21) Application number: 95500033.6
(22) Date of filing: 22.03.1995
(51) Int. Cl.: H04Q 11/04

(54) **A network terminator with asynchronous mode of transfer**

(30) Priority: 14.04.1994 ES 9400754
(71) Applicant: TELEFONICA DE ESPANA, S.A., E-28013 Madrid (ES)
(72) Inventor: Solana De Quesada, Juan Ignacio, E-28043 Madrid (ES)
(74) Representative: Sanchez del Campo Gonzalez de Ubierna, Ramon

(57) **Abstract**

A network terminator with asynchronous mode of transfer to be incorporated into digital networks of integrated services of wideband in order to perform the functions of transmission convergency sublayer of the physical layer of said networks, by simultaneously and continuosly transferring a flow with asynchronous transfer mode to the physical layer of the synchronous digital hierarchy and vice versa, according to recommendations I432, G707, G708 and G709 of CCITT, generating and detecting alarms of physical layer of the route and of section of the synchronous digital hierarchy and of asynchronous transfer mode, providing statistics of service quality of links JDS and ATM.

## Description

### BACKGROUND OF THE INVENTION

The present specification refers to a Patent of Invention referring to a network terminator with asybchronous mode of transfer, the purpose of which is to be incorporated into Digital Networks of Integrated Services of wideband, to perform the functions of transmission convergency sublayer of the physical layer of said networks, that is to say, to simultaneously and continuosly transfer a flow of asybchronous transfer mode to the physical layer of the Synchronous digital Hierarchy, and vice versa, according to recommendations I432, G707, G708 and G709 of CCITT. At the same time, it generates and detects the alarms of the physical layers of route and of section of the Synchronous Digital Hierarchy, and it provides statistics of service quality of the links of Synchronous Digital Hierarchy and Asynchronous Transfer Mode, relying on an external microprocessor on the network, with asynchronous transfer mode, acceding to it and controlling the whole operating programming and configuration registers, the network terminator of asynchronous mode performing, consequently, two processes independentrly each other: transmission and reception.

### FIELD OF THE INVENTION

This invention applies to the telecommunications field, and, in particular, to systems using the asynchronous transfer mode in wideband.

### RELATED ART

The functions of the transmission convergency sublayer of the physical layer of the Digital Network of wideband Integrated Services are performed by elements including a complex, sizeable circuitry, with an important power consumption, and the operation of which requires a complex programming, with the resulting repercussions on the volume and cost of equipment.

In the face of this problem, it is thought that the solution is to provide an integrated circuit performing said functions, and that, in addition to an optimization of the surface of a printed board and the consumption reduction of power, exhibits an easy programming of its operation, without impairing, for it, the quality of the answer to be given by the circuit to the operating requirements.

Up till now, nevertheless,nothing is known by the Applicant about the existence of an invention contemplating the features as pointed out as suitable.

### SUMMARY OF THE INVENTION

The network terminator with asynchronous mode of transfer, as proposed by the invention, constitutes per se only a clear solution to the present problems on this matter, since in it all the advantages contemplated as suitable are contained, without reducing the operation answer, for optimizing the surface of the printed board, the power consumption and operation programming, and, finally, the equipment cost.

In a more definite manner, the network terminator with asynchronous mode of tranefer of the invention is constituted by the following elements, namely:
- Loops
- Process module of Synchronous Digital Hierarchy
- Process module of Asynchronous Transfer Mode
- Interface with an external microprocessor.

The loops constitute the only bond between the reception and transmission processes. There are two sides on the layer of the asynchronous transfer mode, one of them for reception and one for transmission.

In the reception loop, the selected cells and returned to the interface with the physical layer, and in the transmission loop the selected cells from the same interface are sent back to the interface with the layer of asynchronous transfer mode.

Each of these loops has a FIFO memory of, at least, 128 bytes, and carries associated at least four definition registers of headers and, at least, other four masking registers.

Additionally, there are other registers the contents of which is programmed by the external microprocessor CPU, enabling loops and establishing priorities.

The Synchronous Digital Hierarchy process module processes simultaneously and independently links MTS-1 (synchronous transport module of level 1) in both directions, that is to say, transmission and reception, and it consists of two submodules, that is to said, a receiving submodule of Synchronous Digital Hierarchy, and a transmitting submodule of Synchronous Digital Hierarchy, and between them the route FEBE and section FEBE registers.

Next, the structure of the links of the synchronous transport module of level 1 is described, in order to facilitate the understanding of the invention description.

A link of the synchronous transport module of level 1 is a structrure of data organized in bytes, with 270 columns and 9 rows.

The first 9 columns of rows 1, 2, 3, 5, 6, 7, 8 and 9 constite the SOH (defect of section).

The first 9 columns of row 4 and columns 10 thru 270 of the nine rows constitute the AU-4 (administrative unit of level 4).

Within the administrative unit of level 4, the bytes located at the first 9 columns of row 4 compose the PAU-4 (pointer of the administrative unit).

Said pointer of the administrative unit (PAU-4) shows the beggining of the VC-4 (virtual container).

The virtual container (VC-4) composes of 9 rows with 261 columns, and the first column contains the POH (defect of route), and the remainder of columns compose the C-4 (level 4 container).

In all, a link of the synchronous transport module of level 1 (MTS-1) contain 2430 bytes, for which reason its frequency is 125 s, and its binary range is 155.52 Mb/s.

The receiving submodule of Synchronous Digital Hierarchy function is to receive and disassemble the links of the synchronous transport module of level 1 received from a physical means, to send only the information contained in the level 4 container to the Asynchronous Transfer Mode layer.

The receiving module of the Synchronous Digital Hierarchy is composed of the following blocks:
- Byte aligner.
- Link synchronism machine.
- Process of section defect.
- Process of the administrative unit pointer, level 4.
- Process of the virtual container, level 4.

The byte aligner delivers to the rest of the receiving blocks the data aligned with any of the eight phases of the byte clock as determined by the link alignment pattern (PAT), generating a link presynchronism signal toward the link synchronism block and the process of section defect (SOH).

The link synchronismo machine takes on the task of aligning the link and supervising it once acquired.

For it, the link synchronism machine is based on the HJST and PAT signals from the byte aligner and process of section defect (SOH), respectively.

For a synchronization, two receptions coinciding with both - signals are necessary, and once the synchronism has been acquired, it is necessary the production of four erroneous receptions, i.e. HJST=0 and PAT=1 for establishing a loss of synchronism.

This block generates ST and BAT signals. The former, i.e. the ST signal, states the acquired link synchronism, passing only these links to the terminator of asynchronous transfer mode, and rejecting the remainder.

The second signal, i.e. BAT signal,carries out a request of searching a link alignment, which is achieved when the synchronism has not been reached and the HJST signal is not detected.

The SOH process block, i.e., the block of section defect, contains two link meters, one of rows, FJDS, and one of columns, CJDS.

When the HJST signal is received, the meters set at 0 that of rows, and 7 that of columns.

When on synchronism condition, these meters count in module 9 and 270, respectively, as corresponds to a link of synchronous transport module of level 1.

The basic functions of this block are as follows, namely:
- Generating a PAT signal, that is to say, a link alignment pattern, for link alignment when the meters take the value FJDS=0, CJDS=6.
- Segregating the SOH (section defect), by storing the registers which are of interest for the CPU reading and writing: C1, K1, K2, Z1(3), Z2(3) and parity register B2.
- Calculation of parity B2 in the preceding link, which is compared with that received for obtaining the FEBE (block error at the distant end) of section.

The function of the process block of the PAU-4 is to conti-nuosly update the PAU-4 value and the VC-4 delimitation.

Under normal conditions, the PAU-4 shows the beggining of the VC-4, within the AU-4.

The above mentioned cannot be modified depending on the value taken by the concatenated H1 and H2 registers, according to the CCITT standars referring to frequency justifications.

Any PAU-4 modification is not taken into account unless the same value will be received three consecutive times.

Furthermore, this block has a 783 module meter, CAU, having groups of three bytes.

The meter value is compared with that of the PAU-4, and, if coincident, the VC-4 synchronism signal is activated (SVC-4).

There are, also, other two row and columns meters, FVC-4 and CVC-4, respectively, which only count bytes of the VC-4, and which are set with the SVC-4 signal.

The process block of the VC-4 function is to segregate the POH (route defect) to send the C-4 to the ATM layer.

Also, this process block of the VC-4 has two registers wherein the POH interesting bytes are stored: byte of the G1 route state, which can be read and written by the CPU, and byte of parity B3, on the previous VC-4.

Furthermore, this blocks calculates the parity B3 on the previous link, by comparing it with that received to determine the route FEBE.

The transmitting submodule JDS receives data from the ATM layer, inserting them into a C-4.

The transmitting submodule JDS generates a VC-4, starting from the insertion of data into a C-4, adding the route defect POH and assembling with the SOH to form the AU-4.

The transmitting submodule JDS is composed of a generator CV-4, a SOH generator and a transmission timer.

The VC-4 generating block takes out cells of the FIFO memory from the filter ATM and adds the POH.

For it, it uses the following elements, namely:
- Ports of fixed bytes J1, C2, F2, Z3, Z4 and Z5, in which a fixed value is inserted.
- Parity port B3 and associated registers. The parity of the previous VC-4 bytes is estimated.
- Port G1. Into the most significant four bits the number of errors detected by the parity B3 is inserted. The rest of bits is used for indicating a remote alarm of the route.
- Port of cell PH-4 synchronism, which shows the number of bytes lacking up to the following cell.

The SOH generating block assembles the VC-4 with the SOH. It is formed by the following elements, namely:
- Parity B1 port and related registers, calculated on all the previous link bytes after the aleatorization.
- Parity B2 port and related registers, calculated on all the previous link bytes, excepting the first three rows of the SOH before the aleatorization.
- Remote section alarm port, inserting into the byte Z2 the 5 less significant bits showing the number of errors detected by parity B2.
- SOH fixed bytes port, A1, A2 and H1, H2 of PAU-4, which,in transmission is always fixed, pointing to row 1, column 10 of link MTS-1.
- Registers composing the section defect, with access by the micro K1, K2, Z1(3) and C1.
- Aleatorizer. The aleatorization is carried out by a byte format, and it can be inhibited by an external terminal of the circuit, for multiplexing several links MTS-1, forming MTS-N links (synchronous transport module of level N).

The transmission temporizing block consists of two module meters with the corresponding control logic. Owing to the fact that, in transmission, the PAU-4 is not handled, it is only necessary one module 9 meter for the rows, and one module 270 for the columns, with the corresponding control logic.

The process module ATM processes simultaneously and independently the cells ATM in both senses: transmission and reception, and has the following submodules, namely:
- Decoder.
- Inserter ATM.
- Header code.
- Filter ATM.
- Aleatorizer.

The decoder is constituted by a block for syndrome calculation, a syndrome comparing block, a dealeatorizing block, and a block for identifying empty cells and reception loop.

The block for calculating syndrome operates in a different manner, according to the conditions of the machine of synchronism condition. So, in a non synchronism condition, the syndrome is calculated in a resorting manner from byte to byte by means of a differential equation, of an adequate degree, adding adequate initial conditions. In a condition of presynchronism and synchronism, the syndrome is calculated in an absolute manner and cell to cell.

The syndrome comparing block corrects simple errors at the cell headers. Those having multiple errors in headers are detected and rejected. The block has two states, namely:
- Correction: It is the initial condition of the machine, in which headers with simple errors are corrected, and only are rejected cells with headers not correctable. After receiving an erroneous cell, the operation passes to the verification state.
- Verification: All erroneous cells are rejected. After receiving a correct header, the operation returns to the correction state.

The dealeatorizing block is only crossed over by useless loads, including those rejected because they have erroneous headers.

In this manner, the dealeatorizer is not synchronized.

The block of synchronism state machine presents three possible states, namely:
- NS (not synchronism): The byte meter counts freely from 0 to 63. When the value 63 is reached, a signal NST is created, loading the initial conditions for a syndrome calculator.
- PS (presynchronism): In this state, the meter counts from 0 to 52. The cells received are rejected, but they pass through the dealeatorizer for synchronizing it.
- SINC (synchronism): The calls are accepted.

In the identifying block of empty calls and reception loop, the active VC and LZR signals are generated during 53 cycles.

The first signal, i.e. CV signal, affects the empty cells, while the second signal, i.e. LZR signal indicates which cells are segregated from the flow, and sent back to the physical layer, packed in MTS-1 links.

The function of ATM Inserter is to uncouple speeds. At this module, a discontinuos ATM flow arrives, which will be continuos at the exit, due to the following motivations, namely:
- The SOH and POH bytes of the MTS-1 link do not form a part of ATM flow.
- Cells rejected by erroneous headers.
- Cell segregations by selective loops.

The submodule has a FIFO memory having a suitable number of bytes of queue of traffic, and a control logic managing the queue reading and the insertion of empty cells.

While the decoder is desynchronized, the ATM inserter only sends empty cells.

The header coder generates a cyclic redundancy of the first four bytes of the header, and inserts it into the fifth byte.

Furthermore, the header coder includes an identifying block of empty cells and transmission loop generating a CV signal, indicating which cell is empty, and the LZT signal for segregating the cells toward the transmission loop.

The ATM filter uncouples the transmission speeds between the ATM and JDS process modules. It has a FIFO memory of user traffic queue having an adequate number of bytes.

In addition to the FIFO memory, it has a control logic managing the insertion of empty calls and the reading of the traffic queue.

The aleatorizer, included in the same filter than the filter ATM, carries out the last process borne by the cells ATM, i.e., the aleatorizing of the useful load by means of a polynomial of an adequate degree.

The interface with the external microprocessor has its components distributed through all the system blocks, and it is an asynchronous interface, with a protocol of reading or writting access identification (DSACK).

Also, the ATM network terminator has an interruption asking terminal (IRQ), which is active at a low level.

The interruption causes can be masked by means of a register controlling the microprocessor.

The operation of these modules responds to the special structure of a link MTS-1, the section defect (SOH), the route defect (POH), and PAU-4.

### BRIEF DESCRIPTION OF THE DRAWINGS

In order to complement this description and aid to a better understanding of the features of the invention, the accompanying drawings, which are a part of this specification, show in an illustrative but non limitative sense, the following:

Figure 1 shows a general diagram of the blocks of the invention, related to a network terminator with asynchronous mode of transfer.

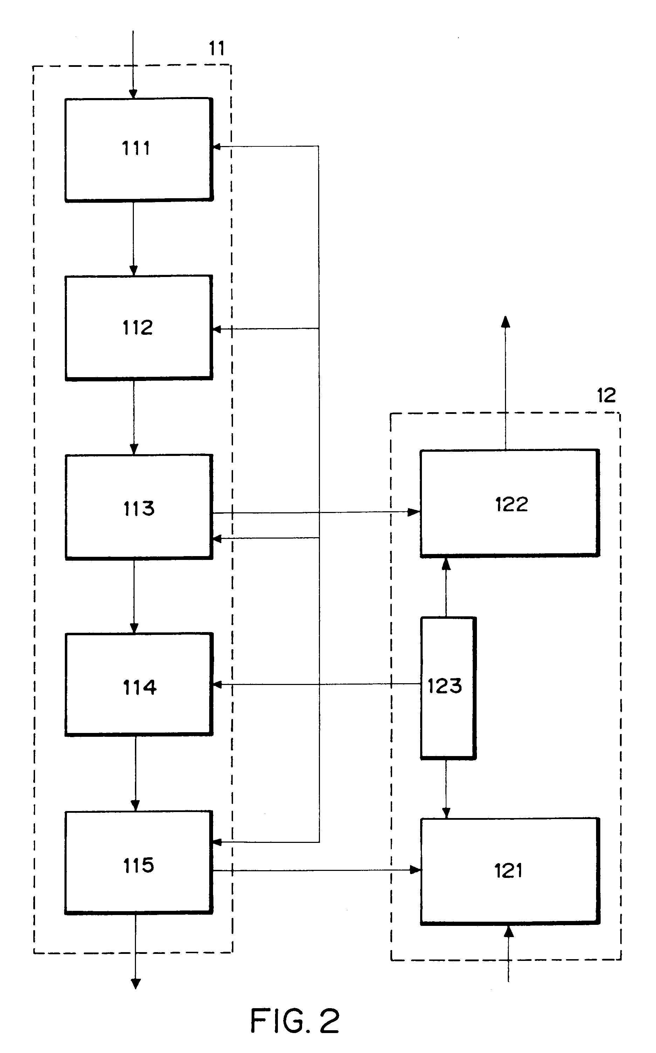

Figure 2 shows a block diagram of the JDS receiving module and transmitting submodule.

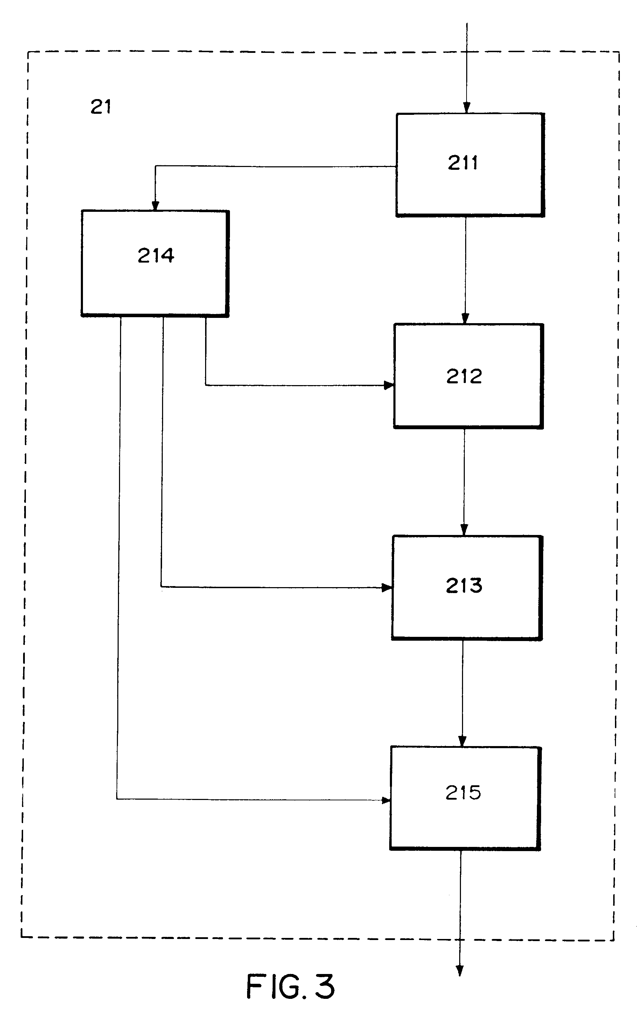

Figure 3 shows a block diagram corresponding to MTA decoder.

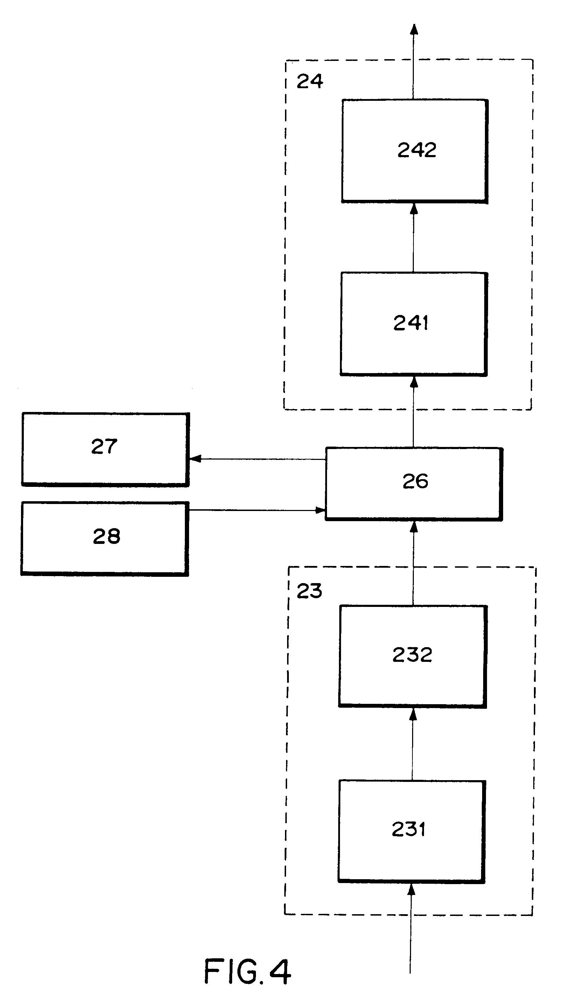

Figure 4 shows a block diagram of the aleatorizer and filter MTA, and MTA coder.

Figure 5 corresponds to the structure of a link MTS-1.

Figure 6 shows, lastly, the structure of the SOH, POH and PAU-4.

### DETAILED DESCRIPTION OF THE PREFERRED EMBODIMENT

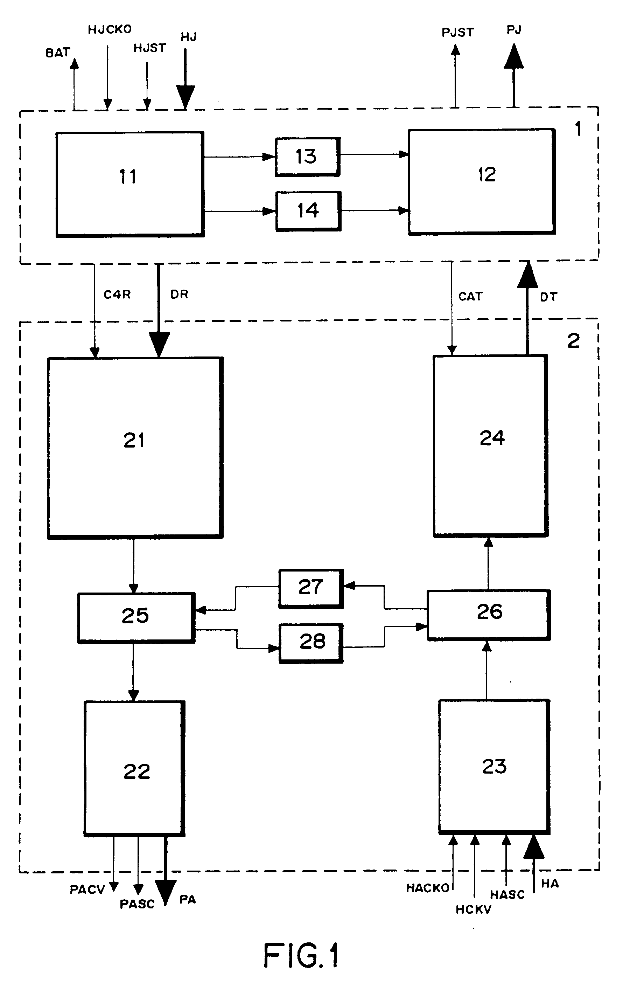

From Figure 1, it can be seen how the ATM network terminator of the invention is constituted by four sections, which are configured as JDS process module (1), ATM process module (2), loops (25) and (26) and interface with an external microprocessor.

The loops (25) and (26) constitute the only bond between the receiving and transmitting processes.

There are two loops in the ATM layer, one for reception (25), and one for transmission (26).

From the receiving loop (25), selected cells are sent back to the interface with the physical layer.

From the transmitting loop (26), selected cells from the same interface are forwarded to the interface with the ATM layer.

Each of these loops (25) and (26) is fitted with a FIFO memory of at least 128 bytes, and carries at least four associated registers defining the headers, and, at least, other four masking registers.

Additionally, there are other registers the content of which is programmed by the CPU of the external microprocessor enabling the loops (25) and (26) and establishing priorities.

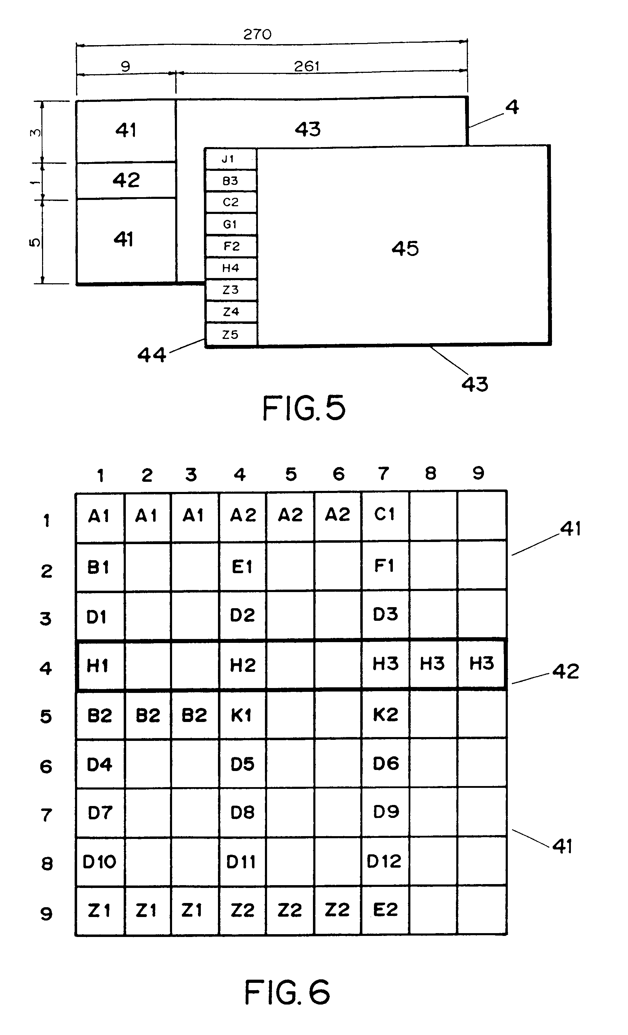

The JDS process module (1) processes simultaneously and independently MTS-1 links (4) (synchronous transport module of level 1) -see Fig. 5- in both senses, transmission and reception, and consists of two submodules: JDS receiving submodule (11), and JDS transmitting submodule (12).

Between them, that is to say, between receiving submodule (11) and transmitting submodule (12), registers of route FEBE (13) - and of section FEBE (14) are located.

Next, with regard to Figs. 5 and 6, the structure of the MTS-1 links (4) is described, in order to make easy the understanding of the invention description. A MTS-1 link (4) is a data structure organized in bytes with 270 columns and 9 rows.

The first 9 columns of rows 1, 2, 3, 5, 6, 7, 8 and 9 constitute the SOH (41), that is to say, the section defect.

The first 9 columns of row 4 (42), and columns 10 thru 270 of the nine rows (43), constitute the AU-4, that is to say, the administrative unit of level 4.

Within the administrative unit of level 4 (AU-4), the bytes located in the first 9 columns of row 4 compose the PAU-4 (42), that is to say, the pointer of the administrative unit.

Said pointer of the administrative unit (PAU-4) (42) shows the beggining of the VC-4 (43), that is to say, the virtual container.

The virtual container (43) (VC-4) consists of nine rows by 261 columns.

The first column contains the POH (44), that is to say, the route defect.

The remainder of the columns composes the C-4 (45), that is to say, the container of level 4.

In all, a MTS-1 link (4) contains 2,430 bytes, for which its frequency is 125 s , and its binary range is 155.52 Mb/s.

The JDS receiving submodule (11) sees about receiving and disassembling the MTS-1 links (4) received from the physical means, to send only the information contained in C-4 (45) to the ATM layer.

It is composed of the following blocks, namely:
- Byte aligner (111).
- Link synchronising machine (112).
- Process of SOH (113).
- Process of PAU-4 (114).
- Process of CV-4 (115).

The byte aligner (111) delivers to the rest of the receiving modules the data aligned with any of the eight phases of the byte - clock determined for the PAT, that is to say, the link alignment pattern, generating a link presynchronism signal toward the link synchronism block (112) and the process of SOH (113).

The link synchronising machine (112) takes on the task of link alignment and supervising it once adquired.

For it, the link synchronizing machine (112) is based on the HJST and PAT signals from the byte aligner (111) and process of SOH (113), respectively.

For a synchronization, two receptions coincident with both - signals are necessary.

Once the synchronism has been obtained, it is necessary to - produce four erronoeus receptions, HJST=0 and PAT=1 for establishing a loss of synchronism.

This block generates ST and BAT signals. The first signal states the link synchronism acquired, passing only these links to the ATM terminator, and rejecting the rest.

The BAT signal carries out a request of searching a link alignment, which is produced when the synchronismo has not been reached, and the HJST signal is not detected.

The block of process of SOH (113) contains two link meters, one of FJDS rows, and one of CJDS columns.

When the HJST signal is received, the meters set at 0 that of rows, and at 7 that of columns. When on synchronism condition, these meters count, respectively, in module 9 and 270, as corresponds to a MTS-1 link (4).

The basic functions of this block are as follows, namely:
- Generating a PAT signal for alignment the link when the meters take the value FJDS=0, CJDS=6.
- Segregating the SOH (41), storing the registers which are of interest for the CPU reading and writting: C1, K1, K2, Z1(3), and the parity register B2.
- Calculation of parity B2 in the preceding link, which is compared with that received for obtaining the FEBE (block error at the distant end) of section.

The function of the process block of the PAU-4 (114) is to continuosly update the PAU-4 value (42) and the VC-4 delimitation (43).

Under normal conditions, the PAU-4 shows the beggining of the VC-4 (43), within the AU-4.

This can be modified according the value taken by the concatenated H1 and H2 registers, as per specified in CCITT standards related to frequency justifications.

Any PAU-4 modification (42) is not taken into account unless the same value will be received by three consecutive times.

Furthermore, this block has a 783 module meter, CAU, relying on groups of three bytes. The value of the meter is compared with that of the PAU-4 (42), and if coincident, the synchronism signal of VC-4 (43) (SVC-4) is activated.

There are, also, other two meters of rows and columns, FVC-4 and CVC-4, respectively, which only count bytes of the VC-4 (43), and which are set with the SVC-4 signal.

The process block of the VC-4 (115) function is to segregate the POH (route defect), to send the C-4 (45) to the ATM layer.

The process block of the VC-4 (115) has two registers wherein the POH (44) interesting bytes are stored: byte of the G1 route state, which can be read and written by the CPU, and byte of parity B3, on the previous VC-4 (43).

Also, this block calculates the parity B3 on the previous link, comparing it with that received for determining the route FEBE.

The transmitting submodule JDS (12) receives the data of the ATM layer, inserting them into a C-4 (45). Starting from this - point, it generates a VC-4 (43), adding the POH route defect (44) and assembling with the SOH (41) to form the AU-4 (42 and 43).

The transmitting submodule JSD (12) is composed of a generator of the CV-4 (121), a generator of SOH (122), and a transmission timer (123).

The generating block of VC-4 (121) takes out cells of the FIFO memory from the filter ATM, and adds the POH (44).

For it, it uses the following elements, namely:
- Ports of fixed bytes J1, C2, F2, Z3, Z4 and Z5, in which a fixed value is inserted.
- Parity port B3 and associated registers. The parity of the bytes of the previous VC-4 (43) is estimated.
- Port G1. Into the most significant four bits, the number of errors detected by the parity B3 is inserted. The rest of bits is used for indicating the remote alarm of route.
- Port of synchronism of cell PH4, which shows the number of bytes missing until the following cell.

The SOH generating block (121) assembles the VC-4 (43) with the SOH (41).

The generating block of the SOH (121) is composed of the following elements, namely:
- Parity port B1 and related registers, calculated on all the previous link bytes after the aleatorization.
- Parity port B2 and related registers, calculated on all the previous link bytes, excepting the first three rows of the SOH (41), before the aleatorizacion.
- Remote section alarm port. Inserted into the byte Z2, the 5 less significant bits show the number of errors detected by the parity B2.
- Port of the fixed bytes of the SOH (41), A1, A2 and H1, H2 of the PAU-4 (42), which, in transmission, is always fixed, pointing to row 1, column 10 of MTS-1 link (4).
- Registers composing the SOH (41), with access by the micro K1, K2, Z1(3) and C1.
- Aleatorizer. The aleatorization is performed in a byte format, and it can be inhibited by means of an external terminal of the circuit for multiplexing of several MTS-1 links (4), forming MTS-N links. (synchronous transport module of module N).

The transmission temporizing block (123) consists of two module meters with the corresponding control logic. Owing to the fact that, in transmission, the PAU (42) is not handled, it is only necessary one module 9 metter for rows, and other for columns, module 270, with the corresponding control logic.

The process module ATM (2) processes simultaneously and independently the cells ATM in both senses, transmission and reception, and has the following submodules, namely:
- Decoder (21).
- Inserter ATM (22)
- Header code (23).
- Filter ATM.
- Aleatorizer (24).

The decoder (21) is constituted by a block for syndrome calculation (211), a syndrome comparing block (212), a dealeatorizing block (213), a block of synchronizing state machine (214) and a block for identifying empty cells and reception loop (215).

The block for calculating syndrome (211) operates in a different manner, according to the conditions of the synchronizing state machine (214).

So, in a non synchronism condition, the syndrome is estimated in a resorting manner from byte to byte by means of a differential equation of an adequate degree, adding the adequate initial conditions. In a condition of presynchronism ans synchronism, the syndrome is calculated in an absolute manner and cell to cell.

The syndrome comparing block (212) corrects simple errors at the cell headers. The cells having multiple errors are detected and - rejected.

Thw syndrome comparing block (212) has two states, namely:
- Correction: It is the initial state or condition of the machine. in which the headers with simple errors are corrected, and only are rejected those cells with not correctable headers. After receiving an erroneous cell, it is passed on to the verification state..
- Verification: All erroneous cells are rejected. After receiving a correct header, it is returned to the correction state.

The dealeatorizing block (213) is only crossed over by useless loads, including those rejected because they have erronoeus headers. So, the dealeatorizer is not desynchronized (213).

The block of machine of synchronism states (214) exhibits three possible states, namely:
- NS (not synchronism): The byte meter counts freely from 0 thru 63. When the value 63 is attained, a NST signal is generated, loading the initial conditions for the calculator of syndrome (211).
- PS (presynchronism): In this state, the meter counts from 0 to 52. The cells received are refected, but they must pass through the dealeatorizer (213) for this being synchronized.
- SINC (synchronism): The cells are accepted.

In the identifying block of empty cells and reception loop (25) the active CV and LZR signals are activated during 53 cycles.

The first signal, that is to say, CV signal, shows the cells empty, while the second signal, that is to say, LZR, shows which cells are segragated from the flow and sent back to the physical layer, - packed in links MTS-1 (4).

The function of the ATM inserter (22) is to uncouple the speeds. At this module,a discontinuos ATM flow arrives, which must be continuos at the exit, due to the following motivations, namely:
- The bytes of the SOH (41) and POH (44) of the MTS-1 link (4) do not are a part of the ATM flow.
- Cells rejected because erroneous headers.
- Segregation of cells by selective loops.

The module has a FIFO memory having an adequate number of bytes of queue de traffic and a control logic managing the queue reading and the insertion of empty cells.

While the decoder (21) is desynchronized, the ATM inserter (22) will only send empty cells.

The header coder (23) generates a cyclic redundancy of the first four bytes of the header, and inserts it into the fifth one.

In addition, the header coder (23) includes an identifying - block of empty cells and the transmission loop (26) generating the CV signal, showing which cell is empty, and the LZT signal for segregating the cells toward the transmission loop (26).

The filter ATM (24) uncouples the transmission speeds between the process modules of ATM (2) and JDS (1).

The filter ATM (24) possesses a FIFO memory of user queue of traffic, having an adequate number of bytes and, in addition to the FIFO, possesses a control logic managing the insertion of empty cells and the queue of traffic reading.

The aleatorizer, which is included in the same block than the filter ATM (24), carries out the last process borne by the ATM - cells, that is to say, the aleatorization of the useful load by means of a polynomial of an adequate degree.

The interface with the external microprocessor has its components distributed through all the system blocks, and it is an asynchronous interface, with a protocol of reading or writting access identification (DSACK).

Also, the ATM network terminator has an interruption asking terminal (IRQ), active at a low level, and the causes of interruption can be masked by means of a register controlling the microprocessor.

The operation of these modules responds to the special structure of a MTS-1 link (4), the section defect (SOH) , the route defect POH (44), and the PAU pointer (42)

It is not considered necessary to extend more this description for an expert in the art to understand the scope of the invention and the advantages derived from it.

The materials, shape, size and arrangement of the components are open to variation, provided that it does imply any alteration to the essence of the invention.

The terms under which this specification has been described should be always taken in an ample and non limitative sense.

## Claims

**1.-** A network terminator with asynchronous transfer mode of those constituted starting from an integrated circuit transferring simultaneously and continuosly a flow with asynchronous transfer mode to the physical layer of the synchronoud digital hierarchy and vice versa, according to recommendations I432, G707, G708 and G709 of CCITT, characterized in that it is constituted by a module of process of synchronous digital hierarchy (1), a module of process with asynchronous transfer mode (2), a reception loop (25), a transmission loop (26), and an interface with a microprocesor external to the circuit.

**2.-** A network terminator with asynchronous transfer mode, as per the claim 1, characterized in that the module of process of synchronous digital hierarchy (1), which simultaneously and independently processes links of synchronous transport module of level 1 (4) (MTS-1) in the transmission and reception senses, is constituted by a receiving submodule of the process module (11) (JDS), and a transmitting submodule of the process module (12) (JDS), with the registers of route FEBE (13) and of section FEBE (14), between them. the receiving submodule of the process module (111) (JDS) being constituted, in turn, by a block of synchronism machine (112), a bloque for processing the section defect (113), a block for processing a pointer of the administrative unit (114), and a block for processing the virtual container (115), the processing submodule of the module of process (12) (JDS) being formed by a block generating a virtual container (121), a block generating a section defect (122), and a block temporizing the transmission (123).

**3.-** A network terminator with asynchronous transfer mode, as per claim 1, characterized in that the module of process with asynchronous transfer mode (2), which simultaneously and independently processes links of synchronous transporte module of level 1 (4), in the transmission and reception senses, is constituted by a decoding submodule (21), an inserting submodule with asynchronous transfer mode (22), a codifying submodule of headers (23), and a filtering submodule of ATM and aleatorizer (24), the decodifying submodule (21) being constituted by a block for syndrome calculation (211), a block for syndrome comparison (212), a dealeatorizing block (213), a block of machine of synchronism state (214), and an identifying block of empty cells and of the reception loop (215), and, on its side, the codifying submodule (23) is configured by a header codifying block (231), and an identifying block of empty cells and of transmission loop (232), the submodule of filter of ATM and aleatorizer (24) being integrated by a block of filter ATM (241) and the aleatorizing block (242).

**4.-** A network terminator with asynchronous transfer mode, as per claim 1, characterized in that it has a reception loop (25) and a tramsission loop (26), in the ATM layer, constituting the sole bond between the reception and transmission processes,the selected cells being sent back to the interface with the physical layer by means the reception loop (25), while, in the transmission loop (26), the selected cells from the same interface are forwarded to the interface with the ATM layer, each loop (25) and (26) containing a FIFO memory having an adequate capacity and carrying four associated registers of header definition, and other four masking registers, additionally relying on other register the content of which is programmed by the external microprocessor to enable links and establish priorities.

**5.-** A network terminator with asynchronous transfer mode, as per claim 1, characterized in that it is fitted with an asynchronous interface, with protocol of reading or writting access identification, through which an external microprocessor is acceded and controls all the certification and programming of operation registers of the circuit, this interface having its components distributed through the different blocks of the network terminator with asynchronous transfer mode.
